# EUROPEAN PATENT SPECIFICATION

(11) **EP 4 099 066 B1**
(45) Date of publication and mention of the grant of the patent: **07.05.2025**
(21) Application number: 22164173.1
(22) Date of filing: 24.03.2022
(51) Int. Cl.: G02B 5/18, G01S 17/88

(54) **TECHNOLOGIES FOR SILICON DIFFRACTION GRATINGS**
TECHNOLOGIEN FÜR SILIZIUM-BEUGUNGSGITTER
TECHNOLOGIES POUR LES RÉSEAUX DE DIFFRACTION EN SILICIUM

(30) Priority: 02.06.2021 US 202163195861 P; 24.12.2021 US 202117561781
(43) Date of publication of application: 07.12.2022
(73) Proprietor: INTEL Corporation, Santa Clara, CA 95054 (US)
(72) Inventor: PETRONIUS, Israel, 3508430 Haifa (IL); FRISH, Harel, Albuquerque, 87122 (US); APPLETON, Randal, Albuquerque, 87104 (US); FRIEDMAN, Ron, 1922500 Givat Oz (IL); JOHNSON, Kenneth, Santa Clara, 95051 (US)
(74) Representative: HGF

(56) References cited:
- CN-A- 111 615 646
- US-A- 5 119 231
- US-A1- 2020 158 495
- US-B2- 11 016 227
- US-B2- 8 165 436

## Description

### CROSS REFERENCE TO RELATED APPLICATIONS

This application claims the benefit of U.S. provisional patent application no. 63/195,861, filed June 2, 2021, and entitled "TECHNOLOGIES FOR SILICON DIFFRACTION GRATINGS."

### BACKGROUND

Diffraction gratings are used in many systems. Diffraction gratings can be characterized based on wavelength, angle, efficiency, size, cost, etc. Diffraction gratings with high efficiency and low cost are desirable.

US 5 119 231 A, US 8 165 436 B2 and US 2020/158495 A1 disclose some diffraction gratings.

### BRIEF DESCRIPTION OF THE DRAWINGS

The present invention is defined in the appended claims.

The concepts described herein are illustrated by way of example and not by way of limitation in the accompanying figures. For simplicity and clarity of illustration, elements illustrated in the figures are not necessarily drawn to scale. Where considered appropriate, reference labels have been repeated among the figures to indicate corresponding or analogous elements.
FIG. 1 illustrates a side view of a simplified diagram of a diffraction grating not forming part of the claimed invention.
FIG. 2 illustrates a top view of the diffraction grating of FIG. 1.
FIG. 3 illustrates a side view of a simplified diagram of a portion of the diffraction grating of FIG. 1.
FIG. 4A illustrates a side view of a simplified diagram of one portion of a diffraction grating with an etch stop and straight walls.
FIG. 4B illustrates a side view of a simplified diagram of one portion of a diffraction grating with an etch stop and sloped walls.
FIG. 5 illustrates a side view of a simplified diagram of one portion of a diffraction grating with a multilayer antireflection coating.
FIG. 6 shows a plot of the efficiency of one embodiment of a diffraction grating.
FIG. 7 shows a plot of the efficiency of one embodiment of a diffraction grating.
FIG. 8 shows a plot of the efficiency of one embodiment of a diffraction grating.
FIG. 9 is a simplified flow diagram of at least one embodiment of a method for manufacturing a diffraction grating.
FIG. 10 is a top view of a wafer and dies that may be included in a microelectronic assembly, in accordance with any of the embodiments disclosed herein.
FIG. 11 is a cross-sectional side view of an integrated circuit device that may be included in a microelectronic assembly, in accordance with any of the embodiments disclosed herein.
FIGS. 12A-12D are perspective views of example planar, gate-all-around, and stacked gate-all-around transistors.
FIG. 13 is a cross-sectional side view of an integrated circuit device assembly that may include a microelectronic assembly, in accordance with any of the embodiments disclosed herein.
FIG. 14 is a block diagram of an example electrical device that may include a microelectronic assembly, in accordance with any of the embodiments disclosed herein.

### DETAILED DESCRIPTION OF THE DRAWINGS

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications consistent with the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on a transitory or non-transitory machine-readable (e.g., computer-readable) storage medium, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Additionally, the inclusion of a structural or method feature in a particular figure is not meant to imply that such feature is required in all embodiments and, in some embodiments, may not be included or may be combined with other features.

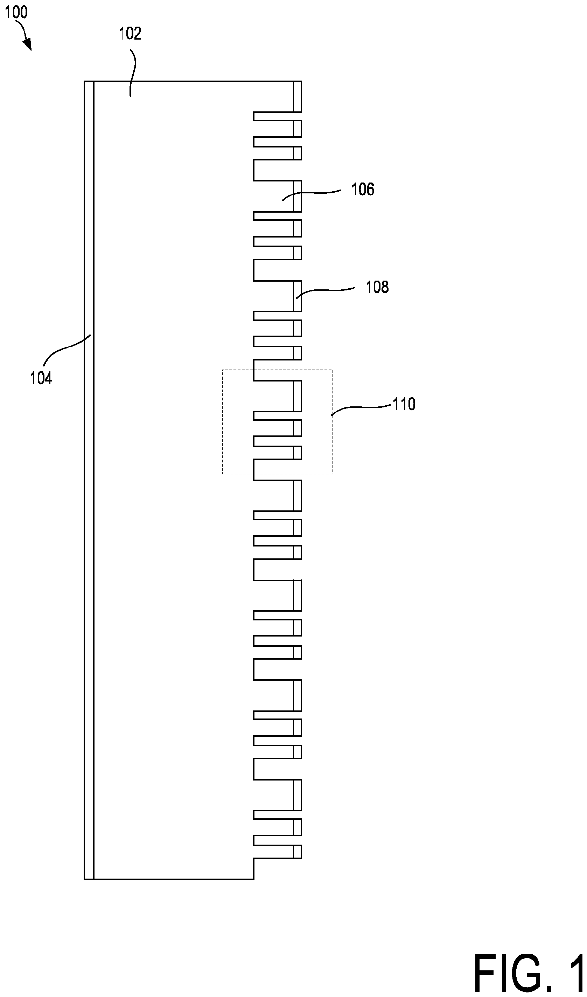

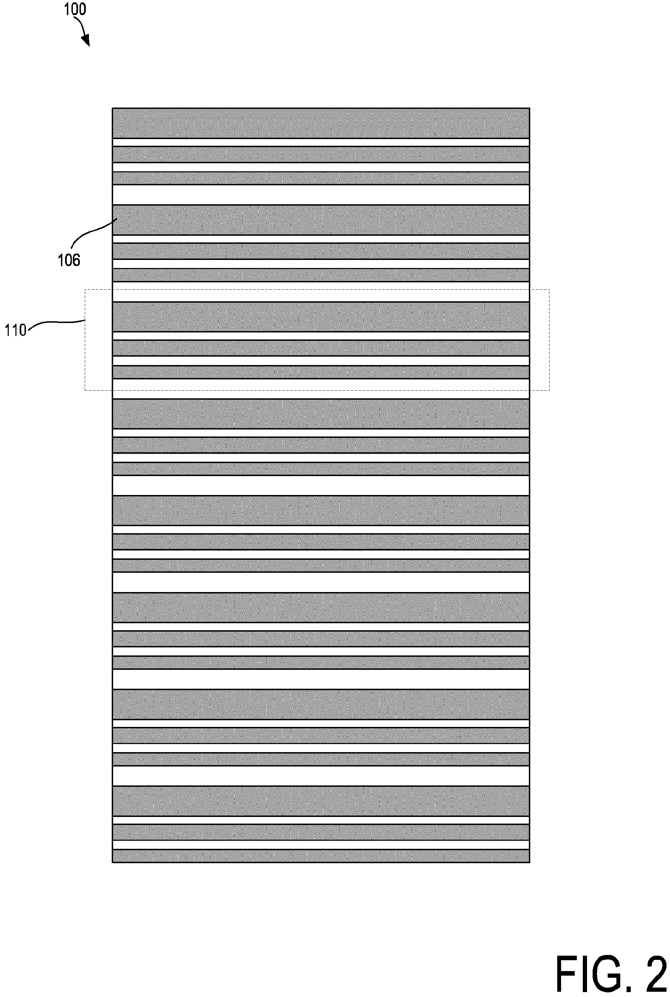

Referring now to FIGS. 1 and 2, in one example outside the scope of the claimed invention, a diffraction grating 100 has a number of grating lines 110 extending from a substrate 102. FIG. 1 shows a side (or cross-section) view of the diffraction grating 100, and FIG. 1 shows a top-down view of the diffraction grating 100. In the illustrative example, an anti-reflection coating 104 is on a surface of the substrate 102 opposite the grating lines 110. FIG. 1 shows a side (or cross-section) view of the diffraction grating 100. In the illustrative example, each grating line 110 includes one or more sub-lines 106, as discussed in more detail below. An anti-reflection coating 108 may be on the end of each grating line 110. The grating lines 110 may have any suitable spacing, such as 300-3,000 grating lines per millimeter, depending on the operating wavelength and other parameters. The grating lines 110 may extend from the substrate 102 by any suitable amount, such as 0.5-5 micrometers.

In use, light incident on the diffraction grating 100 is diffracted into one or more orders. Most of the light is refracted into a first order (or negative first order). The efficiency of the diffraction grating 100 is the amount of light that is diffracted into the first order (or negative first order). The diffraction grating 100 may be a transmission or reflection grating. The diffraction grating 100 may be used in any suitable configuration, such as a Littrow configuration

The diffraction grating 100 may be any suitable dimensions. The diffraction grating 100 is formed using photolithography techniques. For example, a diffraction grating 100 may be formed from a silicon wafer with a 300 millimeter diameter. A single wafer may be formed into a single diffraction grating 100, or a single wafer may be formed into multiple diffraction gratings 100. The diffraction grating 100 may have any suitable thickness, such as 100-2,000 micrometers. In the illustrative embodiment, the diffraction grating 100 may be 700-800 micrometers thick. The diffraction grating 100 may have any suitable shape, such as square, rectangular, circular, etc. The diffraction grating 100 may be designed to operate at any suitable wavelength or wavelength range, such as O band (about 1,260-1,360 nanometers), C band (about 1,500-1,600 nanometers), L band, S band, etc. In the illustrative embodiment, the diffraction grating 100 is designed to operate in the O band. The dispersion of the diffraction grating 100 may be any suitable amount, such as 0.07-0.12 degrees per nanometer. In some embodiments, the dispersion of the diffraction grating 100 may be 0.075, 0.088, or 0.113 degrees per nanometer.

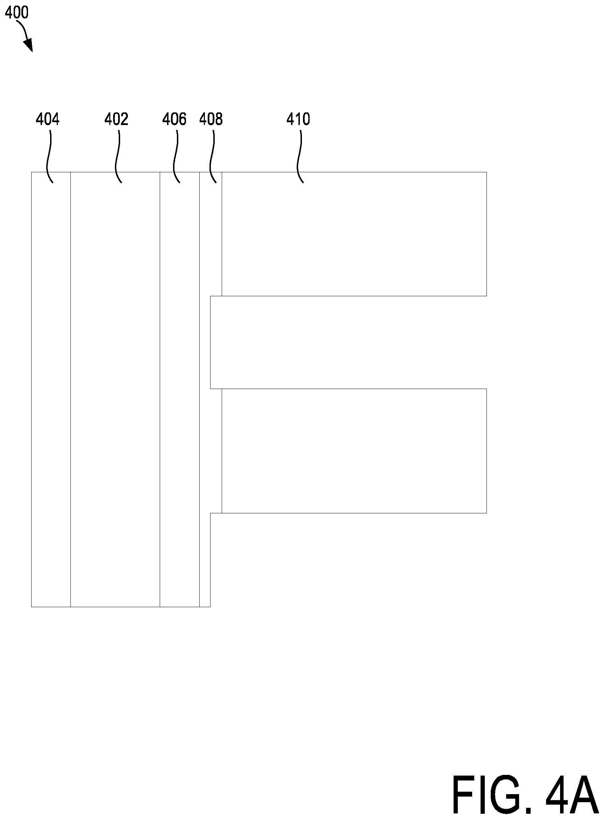

The substrate 102 and the grating lines 110 are silicon. In other embodiments, other substrate material may be used, such as a III-V substrate, an oxide, etc. Each anti-reflection coating 104, 108 is silicon nitride. Other materials may be used for the anti-reflection coatings 104, 108, such as silicon oxide. In some embodiments, the grating lines 110 may be a different material from the substrate 102. For example, in one embodiment, the grating lines 110 may be silicon nitride, and the substrate 102 may be silicon, as shown in FIG. 4A.

Each anti-reflection coating 104, 108 may have any suitable thickness. The thickness of the anti-reflection coating 104, 108 may be selected so that the reflection from the anti-reflection coating 104, 108 approximately cancels the reflection from the substrate 102 at a particular wavelength and incidence angle, etc.

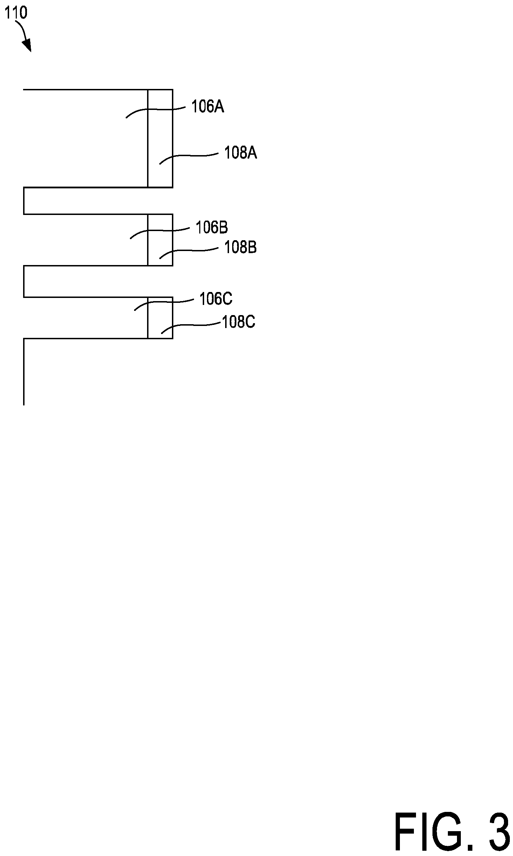

Referring now to FIG. 3, in one embodiment, one grating line 110 has three separate sub-lines, sub-line 106A, 106B, and 106C. Sub-line 106A is the widest, followed by sub-line 106B, followed by 106C. The change in width of the sub-lines 106 results in the effective index of refraction of the grating line 110 changing as a function of position, which causes a similar effect as blazing the grating.

The spacing between grating lines 110 may be any suitable value, such as 0.1-100 micrometers. In the illustrative embodiment, the spacing between grating lines 110 is about one micrometer. The width of and spacing between each sub-line 106 may be any suitable value. For example, the width of and/or spacing between each sub-line 106 may be 0.02-10 micrometers. Each sub-line 106A, 106B, 106C has a corresponding anti-reflection coating 108A, 108B, 108C. The length (i.e., the amount of extension from the substrate 102) of each sub-line 106 may be any suitable value, such as 0.1-10 micrometers. The length of each sub-line 106 is 1.1-1.2 micrometers.

Referring now to FIG. 4A, in one embodiment, a diffraction grating 400 has a substrate 402, a plurality of grating lines 410, and an anti-reflection coating 404 on the surface of the substrate 402 opposite the grating lines 410. The diffraction grating 400 also has an etch stop layer 408. The presence of the etch stop layer 408 can improve uniformity of the depth of the grating lines 410 as they are etched. The etch stop layer 408 may be any suitable material that can resist the etch used to etch the grating lines 410. In the illustrative embodiment, the etch stop layer 408 is silicon dioxide. The dimensions and other design and performance parameters of the diffraction grating 400 may be similar to those of the diffraction grating 100.

In the illustrative embodiment, the grating lines 410 of the diffraction grating 400 are a different material from the substrate 402. For example, the grating lines 410 may be silicon nitride and the substrate may be silicon. The diffraction grating 400 may also include an anti-reflection coating 406 between the substrate 402 and the etch stop 408.

The dimensions of the substrate 402, anti-reflection coatings 404, 406, and grating lines 410 may be any suitable dimensions, similar to the corresponding components of the diffraction grating 100. The etch stop layer 408 may have any suitable thickness, such as 0.05-10 micrometers. In the illustrative embodiment, the anti-reflection coating 404 has a thickness of 0.179 micrometers, the substrate 402 has a thickness of 775 micrometers, the anti-reflection coating 406 has a thickness of 0.147 micrometers, the etch stop layer 408 has a thickness of 0.1 micrometers, the grating lines 410 have a thickness of 1.145 micrometers, each grating line 410 has a width of 0.55 micrometers, and the grating line spacing is 0.995 micrometers (i.e., the empty space between each grating line 410 is 0.445 micrometers). In the illustrative embodiment, the diffraction grating 400 is operated in a Littrow configuration.

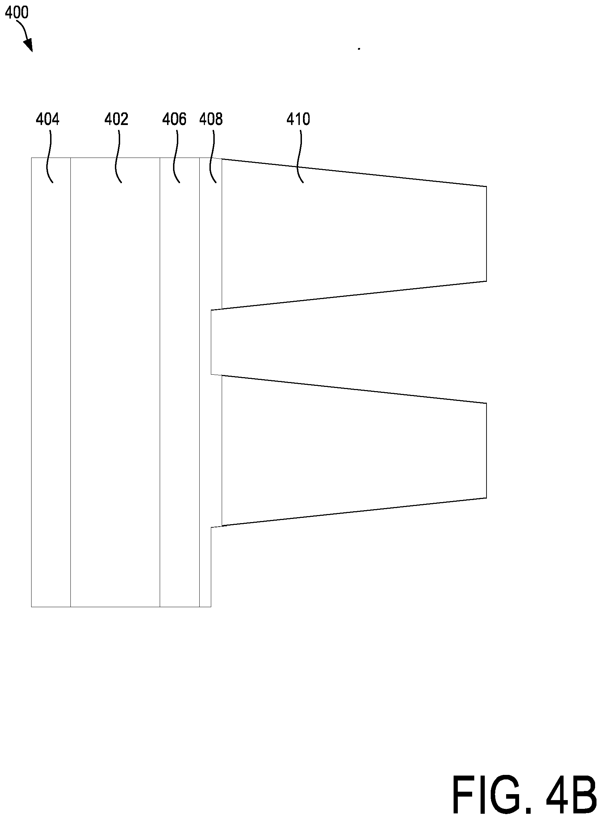

In the illustrative embodiment, the grating 400 is designed to have gratings lines 410 that extend perpendicularly from the substrate 402, as shown in FIG. 4A. In some embodiments, the grating lines 410 may have a slight slope as they extend from the substrate 402, leading to grating lines 410 with a trapezoidal shape shown in FIG. 4B. The slope may be from manufacturing imperfections or may be a design parameter.

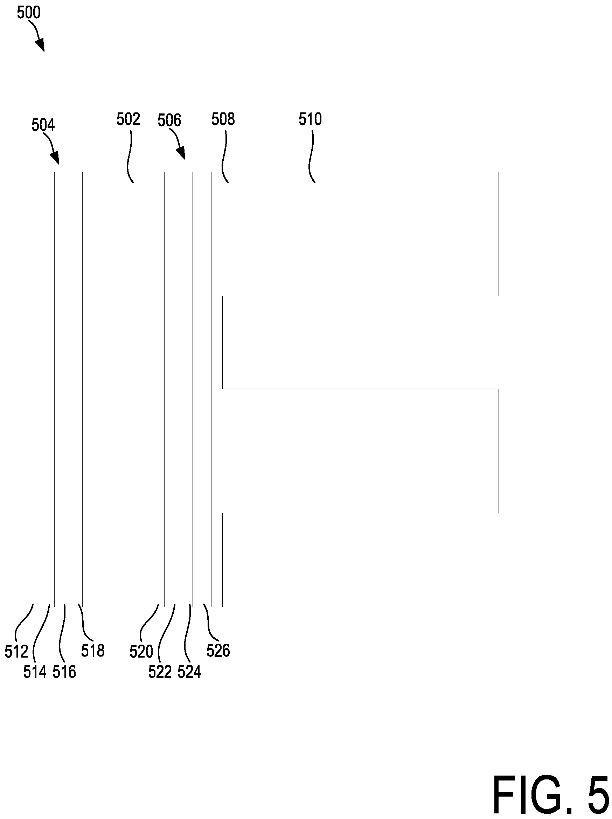

Referring now to FIG. 5, in one embodiment, a diffraction grating 500 has a substrate 502, a plurality of grating lines 510, and an anti-reflection coating 504 on the surface of the substrate 502 opposite the grating lines 510. The diffraction grating 500 also has an etch stop layer 508, and an anti-reflection coating 506 between the substrate 502 and the etch stop layer 508. The dimensions of the diffraction grating 500 may be similar to those of the diffraction grating 100. The gratings lines 510, etch stop 508, and substrate 502 may be similar to the corresponding components of the diffraction grating 400.

In the illustrative embodiment, the anti-reflection coating 504 includes four layers: a first layer 512 of silicon oxide, a first layer 514 of silicon nitride, a second layer 516 of silicon oxide, and a second layer of silicon nitride 518. In the illustrative embodiment, the layer 512 is 0.3906 micrometers thick, the layer 514 is 0.1336 micrometers thick, the layer 516 is 0.4584 micrometers thick, and the layer 518 is 0.1115 micrometers thick. The anti-reflection coating 506 may be similar to the anti-reflection coating 504 in a reverse order. That is, the layer 520 may be similar to layer 518, the layer 522 may be similar to the layer 516, the layer 524 may be similar to the layer 514, and the layer 526 may be similar to the layer 512. In the illustrative embodiment the index of refraction of the silicon nitride layers 514, 518, 520, 524 is about 2.000, and the index of refraction of the silicon oxide layers 512, 516, 522, 526 is about 1.450. In the illustrative embodiment, the index of refraction of the silicon oxide etch stop layer is about 1.494. The etch stop layer 508 may be about 0.1 micrometers thick, with about 0.05 micrometers of the etch stop layer 508 etched away.

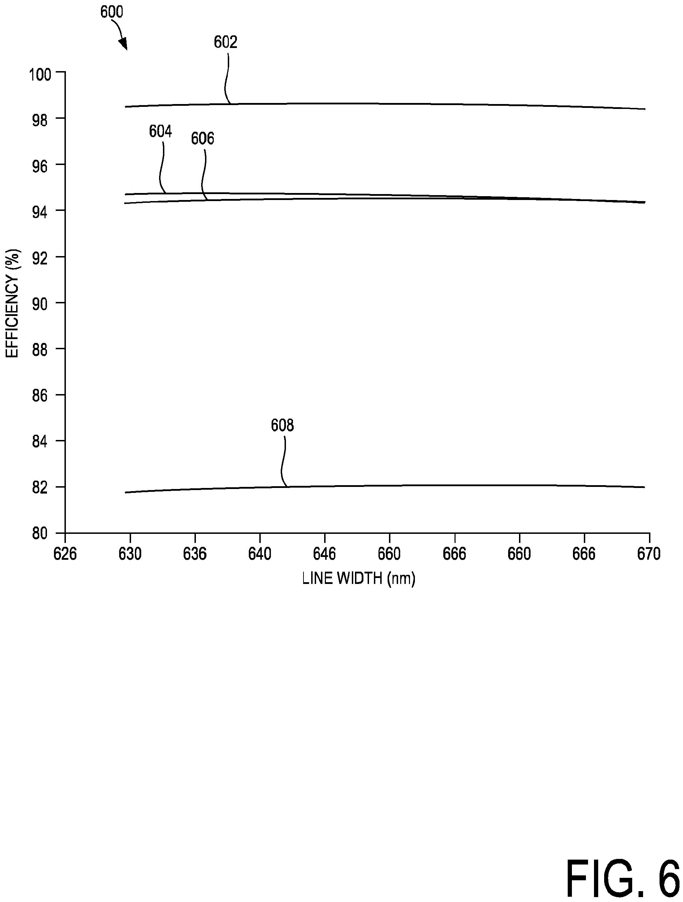

Referring now to FIG. 6, in one embodiment, a plot 600 shows a simulated efficiency of the diffraction grating 400 is shown as a function of different line widths of the grating line 410 for several angles of incidence relative to a design angle of incidence. The plot 600 includes a line 602 showing efficiency for a 0 degree angle relative to a design angle, a line 604 showing efficiency for an 8 degree angle relative to a design angle, a line 606 showing efficiency for a negative 8 degree angle relative to a design angle, and a line 608 showing efficiency for a negative 17 degree angle relative to a design angle. As shown in the plot, the efficiency is relatively insensitive to fluctuations in the width of the grating lines 410 of, e.g., plus or minus 20 nanometers.

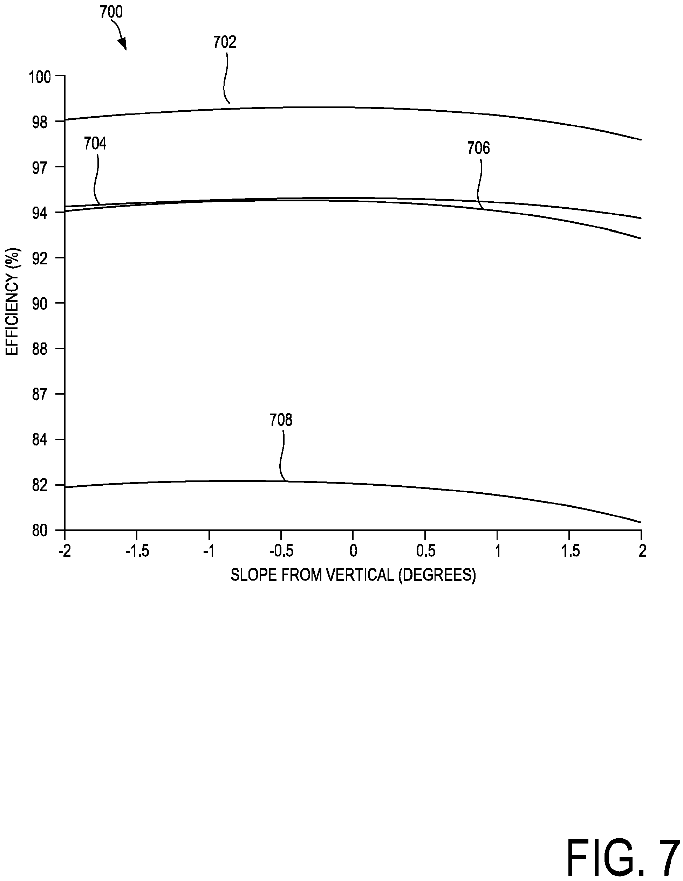

Referring now to FIG. 7, in one embodiment, a plot 700 shows a simulated efficiency of the diffraction grating 400 is shown as a function of different a slope of the grating line 410 from vertical for several angles of incidence relative to a design angle of incidence. In the illustrative embodiment, the grating lines 410 extend perpendicularly out from the substrate 402. The plot 700 shows the efficiency of the diffraction grating 100 as walls of the grating lines 410 slightly deviate from perpendicular to the surface of the substrate 402, forming a trapezoidal shape, as shown in FIG. 4B. The plot 700 includes a line 702 showing efficiency for a 0 degree angle relative to a design angle, a line 704 showing efficiency for an 8 degree angle relative to a design angle, a line 706 showing efficiency for a negative 8 degree angle relative to a design angle, and a line 708 showing efficiency for a negative 17 degree angle relative to a design angle. As shown in the plot, the efficiency is relatively insensitive to fluctuations in the angle of the walls of the grating lines 410 of, e.g., plus or minus 2 degrees.

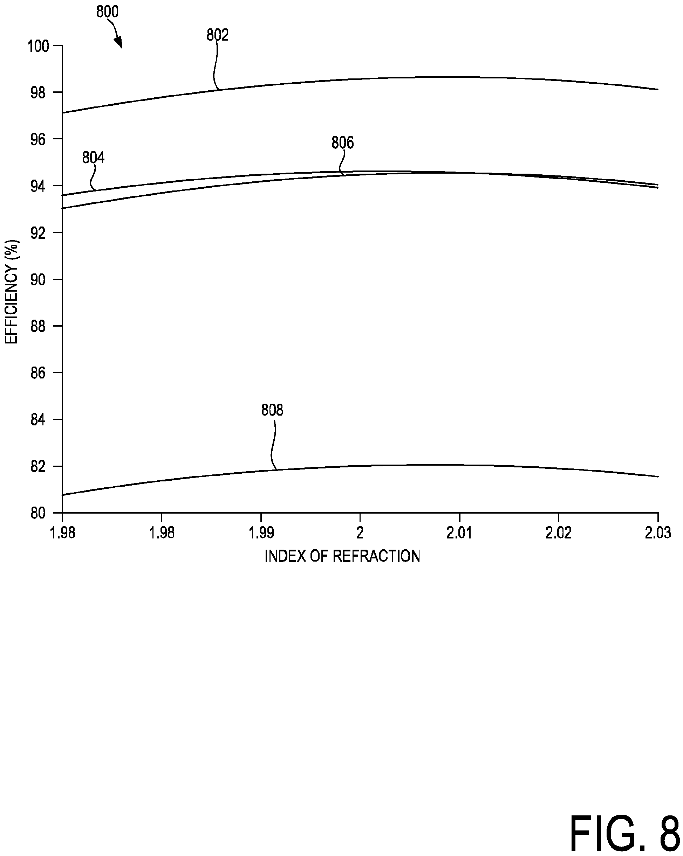

Referring now to FIG. 8, in one embodiment, a plot 800 shows a simulated efficiency of the diffraction grating 400 is shown as a function of different the index of refraction of the grating lines 410. In the illustrative embodiment, the grating lines 410 are silicon nitride with an index of refraction of about 2. If the silicon nitride has a different index of refraction due to imperfections or contaminants, the efficiency of the diffraction grating 400 may be affected. The plot 800 shows the efficiency of the grating 400 as a function of the index of refraction. The plot 800 includes a line 802 showing efficiency for a 0 degree angle relative to a design angle, a line 804 showing efficiency for an 8 degree angle relative to a design angle, a line 806 showing efficiency for a negative 8 degree angle relative to a design angle, and a line 808 showing efficiency for a negative 17 degree angle relative to a design angle. As shown in the plot, the efficiency is relatively insensitive to fluctuations in the index of refraction.

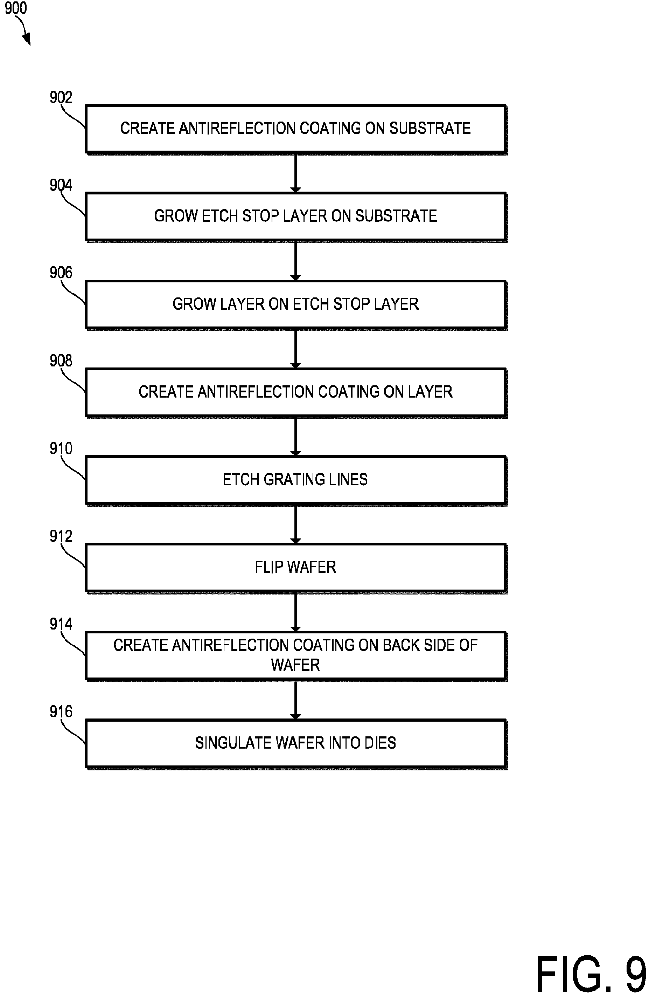

Referring now to FIG. 9, in one embodiment, a flowchart for a method 900 for creating the diffraction grating 100, 400 is shown. The method 900 may be executed by a technician and/or by one or more automated machines. In some embodiments, one or more machines may be programmed to do some or all of the steps of the method 900. Such a machine may include, e.g., a memory, a processor, data storage, etc. The memory and/or data storage may store instructions that, when executed by the machine, causes the machine to perform some or all of the steps of the method 900. The method 900 may use any suitable set of techniques that are used in semiconductor processing, such as chemical vapor deposition, atomic layer deposition, physical layer deposition, molecular beam epitaxy, layer transfer, photolithography, ion implantation, dry etching, wet etching, thermal treatments, flip chip, layer transfer, magnetron sputter deposition, pulsed laser deposition, etc. It should be appreciated that the method 900 is merely one embodiment of a method to create the diffraction grating 100 or 400, and other methods may be used to create the diffraction grating 100 or 400. In some embodiments, steps of the method 900 may be performed in a different order than that shown in the flowchart.

The method 900 begins in block 902, in which an antireflection coating is created on a substrate of a wafer, such as the antireflection coating 406 on the substrate 402. The substrate 402 may be, e.g., silicon, and the antireflection coating 406 may be, e.g., silicon nitride. The wafer may be any suitable size, such as a wafer with a 200-300 millimeter diameter.

In block 904, an etch stop layer may be grown on the substrate (or on the antireflection coating on the substrate). For example, the etch stop layer 408 may be grown on the antireflection layer 406 or the substrate 402.

In block 906, a layer is grown over the etch stop layer. That layer is the layer that will be etched to form the grating lines of the diffraction grating. The layer may be any suitable material, such as silicon nitride. In block 908, another antireflection coating is applied on top, such as the antireflection coating 108.

In block 910, the grating lines are etched. In the illustrative embodiment, the grating lines are etched in the layer grown in block 906 until reaching the etch stop layer deposited in block 904. In other embodiments, the grating lines may be etched directly into the substrate of the wafer. Any suitable etching technique may be used, such as plasma-enhanced etching. In the illustrative embodiment, etching may be done with a precision of less than 20 nanometers in all dimensions across the entire wafer, leading to a high yield.

In block 912, in some embodiments, the wafer is flipped over. Before the wafer is flipped, a protective layer may be applied to the diffraction grating to prevent damage. In block 914, an antireflection coating may be applied to the back side of the wafer, such as the antireflection coating 104 or 404.

In block 916, the wafer is singulated into dies with diffraction gratings. The diffraction gratings may be integrated with other optics (such as mirrors, lenses, light sources, detectors, etc.) into a package for use.

The diffraction gratings disclosed above may be incorporated into various systems. For example, in one embodiment, a diffraction grating may be incorporated into a light detection and ranging (LIDAR) system. The LIDAR system may be incorporated with an autonomous vehicle, an autonomous robot, a drone, a ranging system, and/or any other suitable system. A system including the diffraction grating may include, e.g., one or more computing devices, processors, memory devices, storage devices, etc.

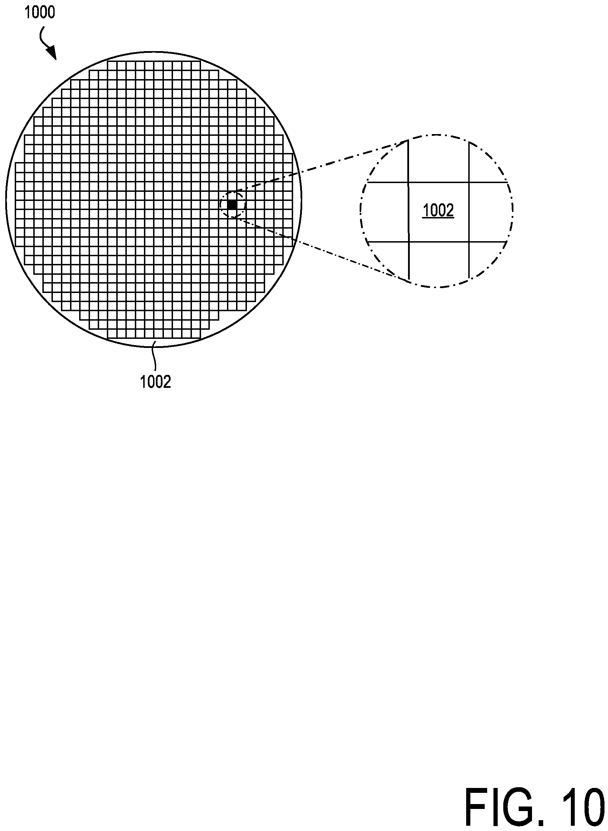

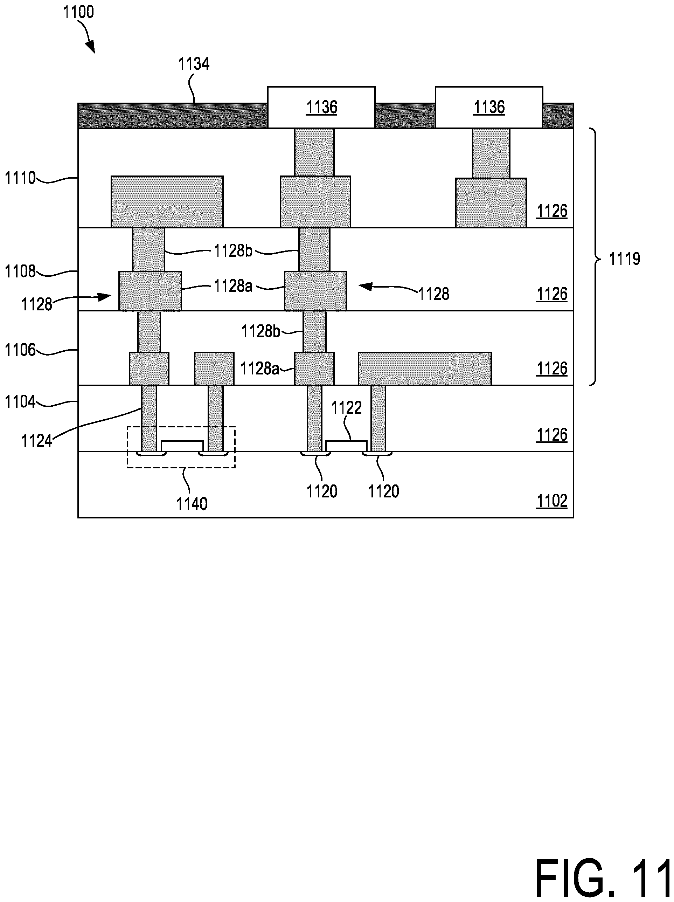

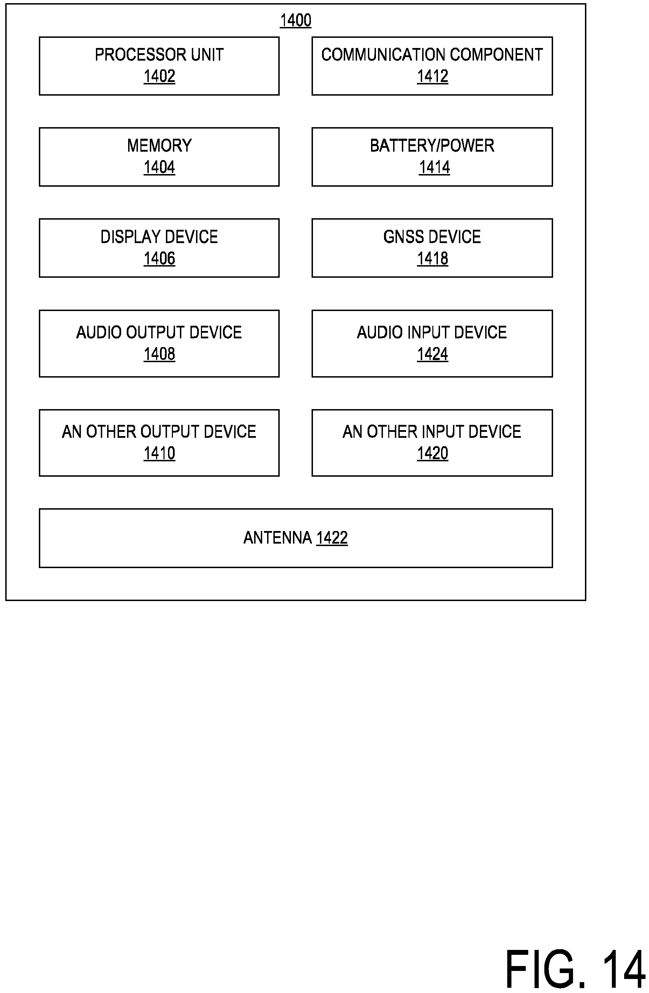

FIG. 10 is a top view of a wafer 1000 and dies 1002 that may be included in any of the suitable system disclosed herein. The wafer 1000 may be composed of semiconductor material and may include one or more dies 1002 having integrated circuit structures formed on a surface of the wafer 1000. The individual dies 1002 may be a repeating unit of an integrated circuit product that includes any suitable integrated circuit. After the fabrication of the semiconductor product is complete, the wafer 1000 may undergo a singulation process in which the dies 1002 are separated from one another to provide discrete "chips" of the integrated circuit product. In some embodiments, the die 1002 may be or include any of the diffraction gratings disclosed herein. The die 1002 may include one or more transistors (e.g., some of the transistors 1140 of FIG. 11, discussed below), supporting circuitry to route electrical signals to the transistors, passive components (e.g., signal traces, resistors, capacitors, or inductors), and/or any other integrated circuit components. In some embodiments, the wafer 1000 or the die 1002 may include a memory device (e.g., a random access memory (RAM) device, such as a static RAM (SRAM) device, a magnetic RAM (MRAM) device, a resistive RAM (RRAM) device, a conductive-bridging RAM (CBRAM) device, etc.), a logic device (e.g., an AND, OR, NAND, or NOR gate), or any other suitable circuit element. Multiple ones of these devices may be combined on a single die 1002. For example, a memory array formed by multiple memory devices may be formed on a same die 1002 as a processor unit (e.g., the processor unit 1402 of FIG. 14) or other logic that is configured to store information in the memory devices or execute instructions stored in the memory array. Various ones of the components disclosed herein may be manufactured using a die-to-wafer assembly technique in which some dies are attached to a wafer 1000 that include others of the dies, and the wafer 1000 is subsequently singulated.

FIG. 11 is a cross-sectional side view of an integrated circuit device 1100 that may be included in any suitable system disclosed herein. One or more of the integrated circuit devices 1100 may be included in one or more dies 1002 (FIG. 10). The integrated circuit device 1100 may be formed on a die substrate 1102 (e.g., the wafer 1000 of FIG. 10) and may be included in a die (e.g., the die 1002 of FIG. 10). The die substrate 1102 may be a semiconductor substrate composed of semiconductor material systems including, for example, n-type or p-type materials systems (or a combination of both). The die substrate 1102 may include, for example, a crystalline substrate formed using a bulk silicon or a silicon-on-insulator (SOI) substructure. In some embodiments, the die substrate 1102 may be formed using alternative materials, which may or may not be combined with silicon, that include, but are not limited to, germanium, indium antimonide, lead telluride, indium arsenide, indium phosphide, gallium arsenide, or gallium antimonide. Further materials classified as group II-VI, III-V, or IV may also be used to form the die substrate 1102. Although a few examples of materials from which the die substrate 1102 may be formed are described here, any material that may serve as a foundation for an integrated circuit device 1100 may be used. The die substrate 1102 may be part of a singulated die (e.g., the dies 1002 of FIG. 10) or a wafer (e.g., the wafer 1000 of FIG. 10).

The integrated circuit device 1100 may include one or more device layers 1104 disposed on the die substrate 1102. The device layer 1104 may include features of one or more transistors 1140 (e.g., metal oxide semiconductor field-effect transistors (MOSFETs)) formed on the die substrate 1102. The transistors 1140 may include, for example, one or more source and/or drain (S/D) regions 1120, a gate 1122 to control current flow between the S/D regions 1120, and one or more S/D contacts 1124 to route electrical signals to/from the S/D regions 1120. The transistors 1140 may include additional features not depicted for the sake of clarity, such as device isolation regions, gate contacts, and the like. The transistors 1140 are not limited to the type and configuration depicted in FIG. 11 and may include a wide variety of other types and configurations such as, for example, planar transistors, non-planar transistors, or a combination of both. Non- planar transistors may include FinFET transistors, such as double-gate transistors or tri-gate transistors, and wrap-around or all-around gate transistors, such as nanoribbon, nanosheet, or nanowire transistors.

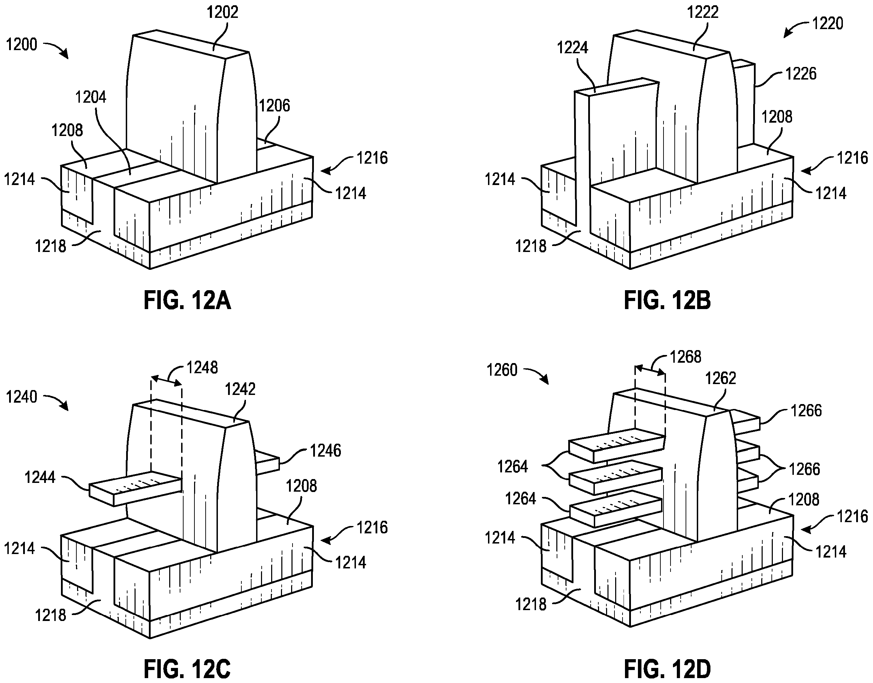

FIGS. 12A-12D are simplified perspective views of example planar, FinFET, gate-all-around, and stacked gate-all-around transistors. The transistors illustrated in FIGS. 12A-12D are formed on a substrate 1216 having a surface 1208. Isolation regions 1214 separate the source and drain regions of the transistors from other transistors and from a bulk region 1218 of the substrate 1216.

FIG. 12A is a perspective view of an example planar transistor 1200 comprising a gate 1202 that controls current flow between a source region 1204 and a drain region 1206. The transistor 1200 is planar in that the source region 1204 and the drain region 1206 are planar with respect to the substrate surface 1208.

FIG. 12B is a perspective view of an example FinFET transistor 1220 comprising a gate 1222 that controls current flow between a source region 1224 and a drain region 1226. The transistor 1220 is non-planar in that the source region 1224 and the drain region 1226 comprise "fins" that extend upwards from the substrate surface 1228. As the gate 1222 encompasses three sides of the semiconductor fin that extends from the source region 1224 to the drain region 1226, the transistor 1220 can be considered a tri-gate transistor. FIG. 12B illustrates one S/D fin extending through the gate 1222, but multiple S/D fins can extend through the gate of a FinFET transistor.

FIG. 12C is a perspective view of a gate-all-around (GAA) transistor 1240 comprising a gate 1242 that controls current flow between a source region 1244 and a drain region 1246. The transistor 1240 is non-planar in that the source region 1244 and the drain region 1246 are elevated from the substrate surface 1228.

FIG. 12D is a perspective view of a GAA transistor 1260 comprising a gate 1262 that controls current flow between multiple elevated source regions 1264 and multiple elevated drain regions 1266. The transistor 1260 is a stacked GAA transistor as the gate controls the flow of current between multiple elevated S/D regions stacked on top of each other. The transistors 1240 and 1260 are considered gate-all-around transistors as the gates encompass all sides of the semiconductor portions that extends from the source regions to the drain regions. The transistors 1240 and 1260 can alternatively be referred to as nanowire, nanosheet, or nanoribbon transistors depending on the width (e.g., widths 1248 and 1268 of transistors 1240 and 1260, respectively) of the semiconductor portions extending through the gate.

Returning to FIG. 11, a transistor 1140 may include a gate 1122 formed of at least two layers, a gate dielectric and a gate electrode. The gate dielectric may include one layer or a stack of layers. The one or more layers may include silicon oxide, silicon dioxide, silicon carbide, and/or a high-k dielectric material.

The high-k dielectric material may include elements such as hafnium, silicon, oxygen, titanium, tantalum, lanthanum, aluminum, zirconium, barium, strontium, yttrium, lead, scandium, niobium, and zinc. Examples of high-k materials that may be used in the gate dielectric include, but are not limited to, hafnium oxide, hafnium silicon oxide, lanthanum oxide, lanthanum aluminum oxide, zirconium oxide, zirconium silicon oxide, tantalum oxide, titanium oxide, barium strontium titanium oxide, barium titanium oxide, strontium titanium oxide, yttrium oxide, aluminum oxide, lead scandium tantalum oxide, and lead zinc niobate. In some embodiments, an annealing process may be carried out on the gate dielectric to improve its quality when a high-k material is used.

The gate electrode may be formed on the gate dielectric and may include at least one p-type work function metal or n-type work function metal, depending on whether the transistor 1140 is to be a p-type metal oxide semiconductor (PMOS) or an n-type metal oxide semiconductor (NMOS) transistor. In some implementations, the gate electrode may consist of a stack of two or more metal layers, where one or more metal layers are work function metal layers and at least one metal layer is a fill metal layer. Further metal layers may be included for other purposes, such as a barrier layer.

For a PMOS transistor, metals that may be used for the gate electrode include, but are not limited to, ruthenium, palladium, platinum, cobalt, nickel, conductive metal oxides (e.g., ruthenium oxide), and any of the metals discussed below with reference to an NMOS transistor (e.g., for work function tuning). For an NMOS transistor, metals that may be used for the gate electrode include, but are not limited to, hafnium, zirconium, titanium, tantalum, aluminum, alloys of these metals, carbides of these metals (e.g., hafnium carbide, zirconium carbide, titanium carbide, tantalum carbide, and aluminum carbide), and any of the metals discussed above with reference to a PMOS transistor (e.g., for work function tuning).

In some embodiments, when viewed as a cross-section of the transistor 1140 along the source-channel-drain direction, the gate electrode may consist of a U-shaped structure that includes a bottom portion substantially parallel to the surface of the die substrate 1102 and two sidewall portions that are substantially perpendicular to the top surface of the die substrate 1102. In other embodiments, at least one of the metal layers that form the gate electrode may simply be a planar layer that is substantially parallel to the top surface of the die substrate 1102 and does not include sidewall portions substantially perpendicular to the top surface of the die substrate 1102. In other embodiments, the gate electrode may consist of a combination of U-shaped structures and planar, non-U-shaped structures. For example, the gate electrode may consist of one or more U-shaped metal layers formed atop one or more planar, non-U-shaped layers.

In some embodiments, a pair of sidewall spacers may be formed on opposing sides of the gate stack to bracket the gate stack. The sidewall spacers may be formed from materials such as silicon nitride, silicon oxide, silicon carbide, silicon nitride doped with carbon, and silicon oxynitride. Processes for forming sidewall spacers are well known in the art and generally include deposition and etching process steps. In some embodiments, a plurality of spacer pairs may be used; for instance, two pairs, three pairs, or four pairs of sidewall spacers may be formed on opposing sides of the gate stack.

The S/D regions 1120 may be formed within the die substrate 1102 adjacent to the gate 1122 of individual transistors 1140. The S/D regions 1120 may be formed using an implantation/diffusion process or an etching/deposition process, for example. In the former process, dopants such as boron, aluminum, antimony, phosphorous, or arsenic may be ion-implanted into the die substrate 1102 to form the S/D regions 1120. An annealing process that activates the dopants and causes them to diffuse farther into the die substrate 1102 may follow the ion-implantation process. In the latter process, the die substrate 1102 may first be etched to form recesses at the locations of the S/D regions 1120. An epitaxial deposition process may then be carried out to fill the recesses with material that is used to fabricate the S/D regions 1120. In some implementations, the S/D regions 1120 may be fabricated using a silicon alloy such as silicon germanium or silicon carbide. In some embodiments, the epitaxially deposited silicon alloy may be doped in situ with dopants such as boron, arsenic, or phosphorous. In some embodiments, the S/D regions 1120 may be formed using one or more alternate semiconductor materials such as germanium or a group III-V material or alloy. In further embodiments, one or more layers of metal and/or metal alloys may be used to form the S/D regions 1120.

Electrical signals, such as power and/or input/output (I/O) signals, may be routed to and/or from the devices (e.g., transistors 1140) of the device layer 1104 through one or more interconnect layers disposed on the device layer 1104 (illustrated in FIG. 11 as interconnect layers 1106-1110). For example, electrically conductive features of the device layer 1104 (e.g., the gate 1122 and the S/D contacts 1124) may be electrically coupled with the interconnect structures 1128 of the interconnect layers 1106-1110. The one or more interconnect layers 1106-1110 may form a metallization stack (also referred to as an "ILD stack") 1119 of the integrated circuit device 1100.

The interconnect structures 1128 may be arranged within the interconnect layers 1106-1110 to route electrical signals according to a wide variety of designs; in particular, the arrangement is not limited to the particular configuration of interconnect structures 1128 depicted in FIG. 11. Although a particular number of interconnect layers 1106-1110 is depicted in FIG. 11, embodiments of the present disclosure include integrated circuit devices having more or fewer interconnect layers than depicted.

In some embodiments, the interconnect structures 1128 may include lines 1128a and/or vias 1128b filled with an electrically conductive material such as a metal. The lines 1128a may be arranged to route electrical signals in a direction of a plane that is substantially parallel with a surface of the die substrate 1102 upon which the device layer 1104 is formed. For example, the lines 1128a may route electrical signals in a direction in and out of the page and/or in a direction across the page. The vias 1128b may be arranged to route electrical signals in a direction of a plane that is substantially perpendicular to the surface of the die substrate 1102 upon which the device layer 1104 is formed. In some embodiments, the vias 1128b may electrically couple lines 1128a of different interconnect layers 1106-1110 together.

The interconnect layers 1106-1110 may include a dielectric material 1126 disposed between the interconnect structures 1128, as shown in FIG. 11. In some embodiments, dielectric material 1126 disposed between the interconnect structures 1128 in different ones of the interconnect layers 1106-1110 may have different compositions; in other embodiments, the composition of the dielectric material 1126 between different interconnect layers 1106-1110 may be the same. The device layer 1104 may include a dielectric material 1126 disposed between the transistors 1140 and a bottom layer of the metallization stack as well. The dielectric material 1126 included in the device layer 1104 may have a different composition than the dielectric material 1126 included in the interconnect layers 1106-1110; in other embodiments, the composition of the dielectric material 1126 in the device layer 1104 may be the same as a dielectric material 1126 included in any one of the interconnect layers 1106-1110.

A first interconnect layer 1106 (referred to as Metal 1 or "M1") may be formed directly on the device layer 1104. In some embodiments, the first interconnect layer 1106 may include lines 1128a and/or vias 1128b, as shown. The lines 1128a of the first interconnect layer 1106 may be coupled with contacts (e.g., the S/D contacts 1124) of the device layer 1104. The vias 1128b of the first interconnect layer 1106 may be coupled with the lines 1128a of a second interconnect layer 1108.

The second interconnect layer 1108 (referred to as Metal 2 or "M2") may be formed directly on the first interconnect layer 1106. In some embodiments, the second interconnect layer 1108 may include via 1128b to couple the lines 1128 of the second interconnect layer 1108 with the lines 1128a of a third interconnect layer 1110. Although the lines 1128a and the vias 1128b are structurally delineated with a line within individual interconnect layers for the sake of clarity, the lines 1128a and the vias 1128b may be structurally and/or materially contiguous (e.g., simultaneously filled during a dual-damascene process) in some embodiments.

The third interconnect layer 1110 (referred to as Metal 3 or "M3") (and additional interconnect layers, as desired) may be formed in succession on the second interconnect layer 1108 according to similar techniques and configurations described in connection with the second interconnect layer 1108 or the first interconnect layer 1106. In some embodiments, the interconnect layers that are "higher up" in the metallization stack 1119 in the integrated circuit device 1100 (i.e., farther away from the device layer 1104) may be thicker that the interconnect layers that are lower in the metallization stack 1119, with lines 1128a and vias 1128b in the higher interconnect layers being thicker than those in the lower interconnect layers.

The integrated circuit device 1100 may include a solder resist material 1134 (e.g., polyimide or similar material) and one or more conductive contacts 1136 formed on the interconnect layers 1106-1110. In FIG. 11, the conductive contacts 1136 are illustrated as taking the form of bond pads. The conductive contacts 1136 may be electrically coupled with the interconnect structures 1128 and configured to route the electrical signals of the transistor(s) 1140 to external devices. For example, solder bonds may be formed on the one or more conductive contacts 1136 to mechanically and/or electrically couple an integrated circuit die including the integrated circuit device 1100 with another component (e.g., a printed circuit board). The integrated circuit device 1100 may include additional or alternate structures to route the electrical signals from the interconnect layers 1106-1110; for example, the conductive contacts 1136 may include other analogous features (e.g., posts) that route the electrical signals to external components.

In some embodiments in which the integrated circuit device 1100 is a double-sided die, the integrated circuit device 1100 may include another metallization stack (not shown) on the opposite side of the device layer(s) 1104. This metallization stack may include multiple interconnect layers as discussed above with reference to the interconnect layers 1106-1110, to provide conductive pathways (e.g., including conductive lines and vias) between the device layer(s) 1104 and additional conductive contacts (not shown) on the opposite side of the integrated circuit device 1100 from the conductive contacts 1136.

In other embodiments in which the integrated circuit device 1100 is a double-sided die, the integrated circuit device 1100 may include one or more through silicon vias (TSVs) through the die substrate 1102; these TSVs may make contact with the device layer(s) 1104, and may provide conductive pathways between the device layer(s) 1104 and additional conductive contacts (not shown) on the opposite side of the integrated circuit device 1100 from the conductive contacts 1136. In some embodiments, TSVs extending through the substrate can be used for routing power and ground signals from conductive contacts on the opposite side of the integrated circuit device 1100 from the conductive contacts 1136 to the transistors 1140 and any other components integrated into the die 1100, and the metallization stack 1119 can be used to route I/O signals from the conductive contacts 1136 to transistors 1140 and any other components integrated into the die 1100.

Multiple integrated circuit devices 1100 may be stacked with one or more TSVs in the individual stacked devices providing connection between one of the devices to any of the other devices in the stack. For example, one or more high-bandwidth memory (HBM) integrated circuit dies can be stacked on top of a base integrated circuit die and TSVs in the HBM dies can provide connection between the individual HBM and the base integrated circuit die. Conductive contacts can provide additional connections between adjacent integrated circuit dies in the stack. In some embodiments, the conductive contacts can be fine-pitch solder bumps (microbumps).

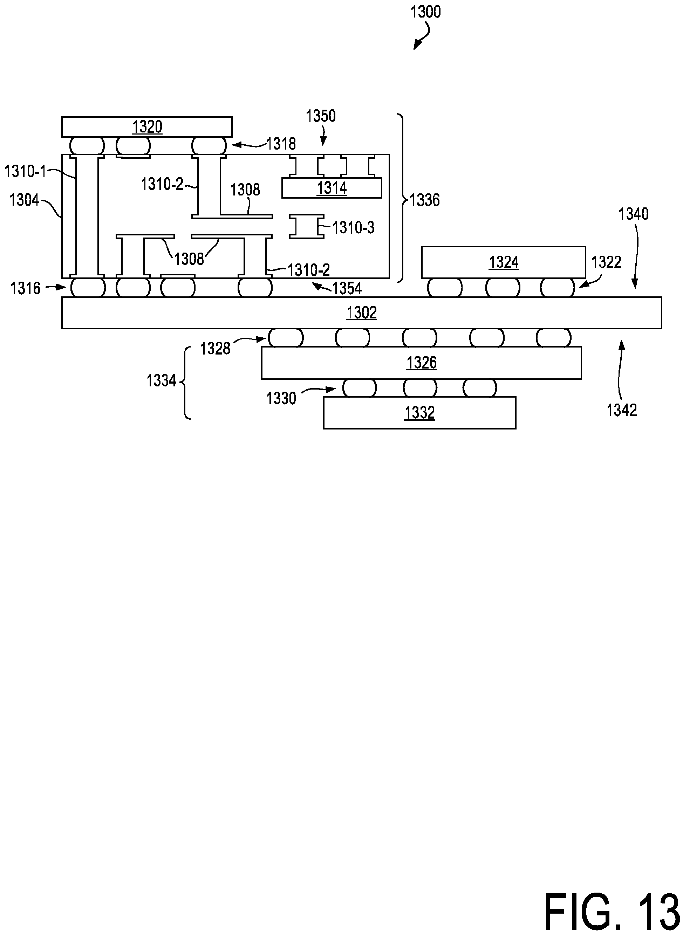

FIG. 13 is a cross-sectional side view of an integrated circuit device assembly 1300. The integrated circuit device assembly 1300 includes a number of components disposed on a circuit board 1302 (which may be a motherboard, system board, mainboard, etc.). The integrated circuit device assembly 1300 includes components disposed on a first face 1340 of the circuit board 1302 and an opposing second face 1342 of the circuit board 1302; generally, components may be disposed on one or both faces 1340 and 1342.

In some embodiments, the circuit board 1302 may be a printed circuit board (PCB) including multiple metal (or interconnect) layers separated from one another by layers of dielectric material and interconnected by electrically conductive vias. The individual metal layers comprise conductive traces. Any one or more of the metal layers may be formed in a desired circuit pattern to route electrical signals (optionally in conjunction with other metal layers) between the components coupled to the circuit board 1302. In other embodiments, the circuit board 1302 may be a non-PCB substrate. The integrated circuit device assembly 1300 illustrated in FIG. 13 includes a package-on-interposer structure 1336 coupled to the first face 1340 of the circuit board 1302 by coupling components 1316. The coupling components 1316 may electrically and mechanically couple the package-on-interposer structure 1336 to the circuit board 1302, and may include solder balls (as shown in FIG. 13), pins (e.g., as part of a pin grid array (PGA), contacts (e.g., as part of a land grid array (LGA)), male and female portions of a socket, an adhesive, an underfill material, and/or any other suitable electrical and/or mechanical coupling structure.

The package-on-interposer structure 1336 may include an integrated circuit component 1320 coupled to an interposer 1304 by coupling components 1318. The coupling components 1318 may take any suitable form for the application, such as the forms discussed above with reference to the coupling components 1316. Although a single integrated circuit component 1320 is shown in FIG. 13, multiple integrated circuit components may be coupled to the interposer 1304; indeed, additional interposers may be coupled to the interposer 1304. The interposer 1304 may provide an intervening substrate used to bridge the circuit board 1302 and the integrated circuit component 1320.

The integrated circuit component 1320 may be a packaged or unpacked integrated circuit product that includes one or more integrated circuit dies (e.g., the die 1002 of FIG. 10, the integrated circuit device 1100 of FIG. 11) and/or one or more other suitable components. A packaged integrated circuit component comprises one or more integrated circuit dies mounted on a package substrate with the integrated circuit dies and package substrate encapsulated in a casing material, such as a metal, plastic, glass, or ceramic. In one example of an unpackaged integrated circuit component 1320, a single monolithic integrated circuit die comprises solder bumps attached to contacts on the die. The solder bumps allow the die to be directly attached to the interposer 1304. The integrated circuit component 1320 can comprise one or more computing system components, such as one or more processor units (e.g., system-on-a-chip (SoC), processor core, graphics processor unit (GPU), accelerator, chipset processor), I/O controller, memory, or network interface controller. In some embodiments, the integrated circuit component 1320 can comprise one or more additional active or passive devices such as capacitors, decoupling capacitors, resistors, inductors, fuses, diodes, transformers, sensors, electrostatic discharge (ESD) devices, and memory devices.

In embodiments where the integrated circuit component 1320 comprises multiple integrated circuit dies, they dies can be of the same type (a homogeneous multi-die integrated circuit component) or of two or more different types (a heterogeneous multi-die integrated circuit component). A multi-die integrated circuit component can be referred to as a multi-chip package (MCP) or multi-chip module (MCM).

In addition to comprising one or more processor units, the integrated circuit component 1320 can comprise additional components, such as embedded DRAM, stacked high bandwidth memory (HBM), shared cache memories, input/output (I/O) controllers, or memory controllers. Any of these additional components can be located on the same integrated circuit die as a processor unit, or on one or more integrated circuit dies separate from the integrated circuit dies comprising the processor units. These separate integrated circuit dies can be referred to as "chiplets". In embodiments where an integrated circuit component comprises multiple integrated circuit dies, interconnections between dies can be provided by the package substrate, one or more silicon interposers, one or more silicon bridges embedded in the package substrate (such as Intel^{®} embedded multi-die interconnect bridges (EMIBs)), or combinations thereof.

Generally, the interposer 1304 may spread connections to a wider pitch or reroute a connection to a different connection. For example, the interposer 1304 may couple the integrated circuit component 1320 to a set of ball grid array (BGA) conductive contacts of the coupling components 1316 for coupling to the circuit board 1302. In the embodiment illustrated in FIG. 13, the integrated circuit component 1320 and the circuit board 1302 are attached to opposing sides of the interposer 1304; in other embodiments, the integrated circuit component 1320 and the circuit board 1302 may be attached to a same side of the interposer 1304. In some embodiments, three or more components may be interconnected by way of the interposer 1304.

In some embodiments, the interposer 1304 may be formed as a PCB, including multiple metal layers separated from one another by layers of dielectric material and interconnected by electrically conductive vias. In some embodiments, the interposer 1304 may be formed of an epoxy resin, a fiberglass-reinforced epoxy resin, an epoxy resin with inorganic fillers, a ceramic material, or a polymer material such as polyimide. In some embodiments, the interposer 1304 may be formed of alternate rigid or flexible materials that may include the same materials described above for use in a semiconductor substrate, such as silicon, germanium, and other group III-V and group IV materials. The interposer 1304 may include metal interconnects 1308 and vias 1310, including but not limited to through hole vias 1310-1 (that extend from a first face 1350 of the interposer 1304 to a second face 1354 of the interposer 1304), blind vias 1310-2 (that extend from the first or second faces 1350 or 1354 of the interposer 1304 to an internal metal layer), and buried vias 1310-3 (that connect internal metal layers).

In some embodiments, the interposer 1304 can comprise a silicon interposer. Through silicon vias (TSV) extending through the silicon interposer can connect connections on a first face of a silicon interposer to an opposing second face of the silicon interposer. In some embodiments, an interposer 1304 comprising a silicon interposer can further comprise one or more routing layers to route connections on a first face of the interposer 1304 to an opposing second face of the interposer 1304.

The interposer 1304 may further include embedded devices 1314, including both passive and active devices. Such devices may include, but are not limited to, capacitors, decoupling capacitors, resistors, inductors, fuses, diodes, transformers, sensors, electrostatic discharge (ESD) devices, and memory devices. More complex devices such as radio frequency devices, power amplifiers, power management devices, antennas, arrays, sensors, and microelectromechanical systems (MEMS) devices may also be formed on the interposer 1304. The package-on-interposer structure 1336 may take the form of any of the package-on-interposer structures known in the art. In embodiments where the interposer is a non-printed circuit board

The integrated circuit device assembly 1300 may include an integrated circuit component 1324 coupled to the first face 1340 of the circuit board 1302 by coupling components 1322. The coupling components 1322 may take the form of any of the embodiments discussed above with reference to the coupling components 1316, and the integrated circuit component 1324 may take the form of any of the embodiments discussed above with reference to the integrated circuit component 1320.

The integrated circuit device assembly 1300 illustrated in FIG. 13 includes a package-on-package structure 1334 coupled to the second face 1342 of the circuit board 1302 by coupling components 1328. The package-on-package structure 1334 may include an integrated circuit component 1326 and an integrated circuit component 1332 coupled together by coupling components 1330 such that the integrated circuit component 1326 is disposed between the circuit board 1302 and the integrated circuit component 1332. The coupling components 1328 and 1330 may take the form of any of the embodiments of the coupling components 1316 discussed above, and the integrated circuit components 1326 and 1332 may take the form of any of the embodiments of the integrated circuit component 1320 discussed above. The package-on-package structure 1334 may be configured in accordance with any of the package-on-package structures known in the art.

FIG. 14 is a block diagram of an example electrical device 1400 that may include one or more of the components disclosed herein. For example, any suitable ones of the components of the electrical device 1400 may include one or more of the integrated circuit device assemblies 1300, integrated circuit components 1320, integrated circuit devices 1100, or integrated circuit dies 1002 disclosed herein. In some embodiments, the electrical device 1400 may be a LIDAR system, including a light source, a diffraction grating 100, 400, and a detector. A number of components are illustrated in FIG. 14 as included in the electrical device 1400, but any one or more of these components may be omitted or duplicated, as suitable for the application. In some embodiments, some or all of the components included in the electrical device 1400 may be attached to one or more motherboards mainboards, or system boards. In some embodiments, one or more of these components are fabricated onto a single system-on-a-chip (SoC) die.

Additionally, in various embodiments, the electrical device 1400 may not include one or more of the components illustrated in FIG. 14, but the electrical device 1400 may include interface circuitry for coupling to the one or more components. For example, the electrical device 1400 may not include a display device 1406, but may include display device interface circuitry (e.g., a connector and driver circuitry) to which a display device 1406 may be coupled. In another set of examples, the electrical device 1400 may not include an audio input device 1424 or an audio output device 1408, but may include audio input or output device interface circuitry (e.g., connectors and supporting circuitry) to which an audio input device 1424 or audio output device 1408 may be coupled.

The electrical device 1400 may include one or more processor units 1402 (e.g., one or more processor units). As used herein, the terms "processor unit", "processing unit" or "processor" may refer to any device or portion of a device that processes electronic data from registers and/or memory to transform that electronic data into other electronic data that may be stored in registers and/or memory. The processor unit 1402 may include one or more digital signal processors (DSPs), application-specific integrated circuits (ASICs), central processing units (CPUs), graphics processing units (GPUs), general-purpose GPUs (GPGPUs), accelerated processing units (APUs), field-programmable gate arrays (FPGAs), neural network processing units (NPUs), data processor units (DPUs), accelerators (e.g., graphics accelerator, compression accelerator, artificial intelligence accelerator), controller cryptoprocessors (specialized processors that execute cryptographic algorithms within hardware), server processors, controllers, or any other suitable type of processor units. As such, the processor unit can be referred to as an XPU (or xPU).

The electrical device 1400 may include a memory 1404, which may itself include one or more memory devices such as volatile memory (e.g., dynamic random access memory (DRAM), static random-access memory (SRAM)), non-volatile memory (e.g., read-only memory (ROM), flash memory, chalcogenide-based phase-change non-voltage memories), solid state memory, and/or a hard drive. In some embodiments, the memory 1404 may include memory that is located on the same integrated circuit die as the processor unit 1402. This memory may be used as cache memory (e.g., Level 1 (L1), Level 2 (L2), Level 3 (L3), Level 4 (L4), Last Level Cache (LLC)) and may include embedded dynamic random access memory (eDRAM) or spin transfer torque magnetic random access memory (STT-MRAM).

In some embodiments, the electrical device 1400 can comprise one or more processor units 1402 that are heterogeneous or asymmetric to another processor unit 1402 in the electrical device 1400. There can be a variety of differences between the processing units 1402 in a system in terms of a spectrum of metrics of merit including architectural, microarchitectural, thermal, power consumption characteristics, and the like. These differences can effectively manifest themselves as asymmetry and heterogeneity among the processor units 1402 in the electrical device 1400.

In some embodiments, the electrical device 1400 may include a communication component 1412 (e.g., one or more communication components). For example, the communication component 1412 can manage wireless communications for the transfer of data to and from the electrical device 1400. The term "wireless" and its derivatives may be used to describe circuits, devices, systems, methods, techniques, communications channels, etc., that may communicate data through the use of modulated electromagnetic radiation through a nonsolid medium. The term "wireless" does not imply that the associated devices do not contain any wires, although in some embodiments they might not.

The communication component 1412 may implement any of a number of wireless standards or protocols, including but not limited to Institute for Electrical and Electronic Engineers (IEEE) standards including Wi-Fi (IEEE 802.11 family), IEEE 802.16 standards (e.g., IEEE 802.16-2005 Amendment), Long-Term Evolution (LTE) project along with any amendments, updates, and/or revisions (e.g., advanced LTE project, ultra mobile broadband (UMB) project (also referred to as "3GPP2"), etc.). IEEE 802.16 compatible Broadband Wireless Access (BWA) networks are generally referred to as WiMAX networks, an acronym that stands for Worldwide Interoperability for Microwave Access, which is a certification mark for products that pass conformity and interoperability tests for the IEEE 802.16 standards. The communication component 1412 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication component 1412 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication component 1412 may operate in accordance with Code Division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication component 1412 may operate in accordance with other wireless protocols in other embodiments. The electrical device 1400 may include an antenna 1422 to facilitate wireless communications and/or to receive other wireless communications (such as AM or FM radio transmissions).

In some embodiments, the communication component 1412 may manage wired communications, such as electrical, optical, or any other suitable communication protocols (e.g., IEEE 802.3 Ethernet standards). As noted above, the communication component 1412 may include multiple communication components. For instance, a first communication component 1412 may be dedicated to shorter-range wireless communications such as Wi-Fi or Bluetooth, and a second communication component 1412 may be dedicated to longer-range wireless communications such as global positioning system (GPS), EDGE, GPRS, CDMA, WiMAX, LTE, EV-DO, or others. In some embodiments, a first communication component 1412 may be dedicated to wireless communications, and a second communication component 1412 may be dedicated to wired communications.

The electrical device 1400 may include battery/power circuitry 1414. The battery/power circuitry 1414 may include one or more energy storage devices (e.g., batteries or capacitors) and/or circuitry for coupling components of the electrical device 1400 to an energy source separate from the electrical device 1400 (e.g., AC line power).

The electrical device 1400 may include a display device 1406 (or corresponding interface circuitry, as discussed above). The display device 1406 may include one or more embedded or wired or wirelessly connected external visual indicators, such as a heads-up display, a computer monitor, a projector, a touchscreen display, a liquid crystal display (LCD), a light-emitting diode display, or a flat panel display.

The electrical device 1400 may include an audio output device 1408 (or corresponding interface circuitry, as discussed above). The audio output device 1408 may include any embedded or wired or wirelessly connected external device that generates an audible indicator, such speakers, headsets, or earbuds.

The electrical device 1400 may include an audio input device 1424 (or corresponding interface circuitry, as discussed above). The audio input device 1424 may include any embedded or wired or wirelessly connected device that generates a signal representative of a sound, such as microphones, microphone arrays, or digital instruments (e.g., instruments having a musical instrument digital interface (MIDI) output). The electrical device 1400 may include a Global Navigation Satellite System (GNSS) device 1418 (or corresponding interface circuitry, as discussed above), such as a Global Positioning System (GPS) device. The GNSS device 1418 may be in communication with a satellite-based system and may determine a geolocation of the electrical device 1400 based on information received from one or more GNSS satellites, as known in the art.

The electrical device 1400 may include an other output device 1410 (or corresponding interface circuitry, as discussed above). Examples of the other output device 1410 may include an audio codec, a video codec, a printer, a wired or wireless transmitter for providing information to other devices, or an additional storage device.

The electrical device 1400 may include an other input device 1420 (or corresponding interface circuitry, as discussed above). Examples of the other input device 1420 may include an accelerometer, a gyroscope, a compass, an image capture device (e.g., monoscopic or stereoscopic camera), a trackball, a trackpad, a touchpad, a keyboard, a cursor control device such as a mouse, a stylus, a touchscreen, proximity sensor, microphone, a bar code reader, a Quick Response (QR) code reader, electrocardiogram (ECG) sensor, PPG (photoplethysmogram) sensor, galvanic skin response sensor, any other sensor, or a radio frequency identification (RFID) reader.

The electrical device 1400 may have any desired form factor, such as a hand-held or mobile electrical device (e.g., a cell phone, a smart phone, a mobile internet device, a music player, a tablet computer, a laptop computer, a 2-in-1 convertible computer, a portable all-in-one computer, a netbook computer, an ultrabook computer, a personal digital assistant (PDA), an ultra mobile personal computer, a portable gaming console, etc.), a desktop electrical device, a server, a rack-level computing solution (e.g., blade, tray or sled computing systems), a workstation or other networked computing component, a printer, a scanner, a monitor, a set-top box, an entertainment control unit, a stationary gaming console, smart television, a vehicle control unit, a digital camera, a digital video recorder, a wearable electrical device or an embedded computing system (e.g., computing systems that are part of a vehicle, smart home appliance, consumer electronics product or equipment, manufacturing equipment). In some embodiments, the electrical device 1400 may be any other electronic device that processes data. In some embodiments, the electrical device 1400 may comprise multiple discrete physical components. Given the range of devices that the electrical device 1400 can be manifested as in various embodiments, in some embodiments, the electrical device 1400 can be referred to as a computing device or a computing system.

### EXAMPLES

Illustrative examples of the technologies disclosed herein are provided below. An embodiment of the technologies may include any one or more, and any combination of, the examples described below.

Example 1 includes a diffraction grating comprising a silicon substrate; and a plurality of grating lines extending from the silicon substrate to diffract light at one or more wavelengths, wherein individual grating lines of the plurality of grating lines have a length of at least one micrometer as measured from the silicon substrate, wherein a maximum difference in length of any two of the plurality of grating lines is less than 20 nanometers.

Example 2 includes the subject matter of Example 1, and wherein the substrate comprises silicon.

Example 3 includes the subject matter of any of Examples 1 and 2, and further including an anti-reflection coating on a surface of the silicon substrate opposite the plurality of grating lines, wherein the anti-reflection coating comprises a composition of silicon and nitrogen.

Example 4 includes the subject matter of any of Examples 1-3, and further including an anti-reflection coating on a surface of the silicon substrate opposite the plurality of grating lines, wherein the anti-reflection coating comprises a first layer comprising a composition of silicon and nitrogen, a second layer comprising a composition of silicon and oxygen, a third layer comprising a composition of silicon and nitrogen, and a fourth layer comprising a composition of silicon and oxygen.

Example 5 includes the subject matter of any of Examples 1-4, and wherein individual grating lines of the plurality of grating lines comprise silicon.

Example 6 includes the subject matter of any of Examples 1-5, and wherein individual grating lines of the plurality of grating lines comprise a composition of silicon and nitrogen.

Example 7 includes the subject matter of any of Examples 1-6, and wherein the plurality of grating lines is to diffract light at a wavelength between 1,260-1,360 nanometers with an efficiency over 90% in a Littrow configuration.

Example 8 includes the subject matter of any of Examples 1-7, and wherein individual grating lines of the plurality of grating lines comprise a plurality of sub-lines, wherein individual sub-lines of the plurality of sub-lines of the plurality of grating lines are to cause a position-dependent change of an effective index of refraction of the corresponding grating line.

Example 9 includes the subject matter of any of Examples 1-8, and wherein individual grating lines of the plurality of grating lines have an anti-reflection coating on a distal end of the grating line.

Example 10 includes the subject matter of any of Examples 1-9, and further including an etch stop layer between the substrate and the plurality of grating lines.

Example 11 includes a system comprising a light detection and ranging (LIDAR) system, wherein the LIDAR system comprises the diffraction grating any of Examples 1-10.

Example 12 includes the subject matter of Example 11, and further including an autonomous vehicle, wherein the autonomous vehicle comprises the LIDAR system.

Example 13 includes a diffraction grating comprising a substrate; and a plurality of grating lines extending from the substrate to diffract light at one or more wavelengths, wherein the diffraction grating has an efficiency of over 80% into a first order over a range of input angles, wherein the range of input angles spans over 30° around a Littrow angle.

Example 14 includes the subject matter of Example 13, and further including an anti-reflection coating on a surface of the substrate opposite the plurality of grating lines, wherein the anti-reflection coating comprises a composition of silicon and nitrogen.

Example 15 includes the subject matter of any of Examples 13 and 14, and further including an anti-reflection coating on a surface of the substrate opposite the plurality of grating lines, wherein the anti-reflection coating comprises a first layer comprising a composition of silicon and nitrogen, a second layer comprising a composition of silicon and oxygen, a third layer comprising a composition of silicon and nitrogen, and a fourth layer comprising a composition of silicon and oxygen.

Example 16 includes the subject matter of any of Examples 13-15, and wherein individual grating lines of the plurality of grating lines comprise silicon.

Example 17 includes the subject matter of any of Examples 13-16, and wherein individual grating lines of the plurality of grating lines comprise a composition of silicon and nitrogen.

Example 18 includes a method comprising growing an etch stop layer on a substrate of a wafer; creating a second layer on the etch stop layer; and etching the second layer to create a plurality of grating lines of a diffraction grating on the substrate.

Example 19 includes the subject matter of Example 18, and further including flipping the wafer; and creating an anti-reflection coating on a back side of the wafer opposite the plurality of grating lines.

Example 20 includes the subject matter of any of Examples 18 and 19, and further including creating an anti-reflection coating on the substrate, wherein growing the etch stop layer comprises growing the etch stop layer on the anti-reflection coating.

Example 21 includes the subject matter of any of Examples 18-20, and further including creating an anti-reflection coating on the substrate, wherein the anti-reflection coating comprises a first layer comprising a composition of silicon and nitrogen, a second layer comprising a composition of silicon and oxygen, a third layer comprising a composition of silicon and nitrogen, and a fourth layer comprising a composition of silicon and oxygen.

Example 22 includes the subject matter of any of Examples 18-21, and wherein the wafer has a diameter over 250 millimeters.

Example 23 includes the subject matter of any of Examples 18-22, and wherein etching the second layer comprises etching the second layer with a plasma-enhanced etch.

Example 24 includes the subject matter of any of Examples 18-23, and wherein the substrate comprises silicon.

Example 25 includes the subject matter of any of Examples 18-24, and wherein the second layer comprises silicon.

Example 26 includes the subject matter of any of Examples 18-25, and wherein the second layer comprises a composition of silicon and nitrogen.

Example 27 includes the subject matter of any of Examples 18-26, and wherein etching the second layer comprises etching the second layer based on a design of the diffraction grating, wherein an efficiency of the diffraction grating is over 80% for a range of wall slopes of the plurality of grating lines relative to wall slopes of the design and a range of input angles, wherein the range of input angles spans over 30° around a Littrow angle, wherein the range of wall slopes spans over 4°.

Example 28 includes the subject matter of any of Examples 18-27, and wherein etching the second layer comprises etching the second layer based on a design of the diffraction grating, wherein an efficiency of the diffraction grating is over 80% for a range of indices of refraction of the second layer relative to a design index of refraction of the second layer and a range of input angles, wherein the range of input angles spans over 30° a Littrow angle, wherein the range of indices of refraction over 5% of the design index of refraction.

## Claims

1. A diffraction grating (400; 500) comprising:
a silicon substrate (402; 502);
a plurality of grating lines (410; 510) extending from the silicon substrate (402; 502) to diffract light at one or more wavelengths;
an etch stop layer (408; 508) between the substrate (402; 502) and the plurality of grating lines (410; 510); and
an anti-reflection coating (406; 506) between the substrate (402; 502) and the etch stop layer (408; 508);
wherein individual grating lines of the plurality of grating lines (410; 510) have a length of at least one micrometer as measured from the silicon substrate (402; 502),
wherein a maximum difference in length of any two of the plurality of grating lines is less than 20 nanometers.

2. The diffraction grating of claim 1, further comprising a further anti-reflection coating on a surface of the silicon substrate opposite the plurality of grating lines,
wherein the further anti-reflection coating comprises silicon and nitrogen.

3. The diffraction grating of claim 1, further comprising a further anti-reflection coating on a surface of the silicon substrate opposite the plurality of grating lines,
wherein the anti-reflection coating comprises a first layer comprising silicon and nitrogen, a second layer comprising silicon and oxygen, a third layer comprising silicon and nitrogen, and a fourth layer comprising silicon and oxygen.

4. The diffraction grating of any of claims 1-3, wherein individual grating lines of the plurality of grating lines comprise silicon.

5. The diffraction grating of any of claims 1-3, wherein individual grating lines of the plurality of grating lines comprise silicon and nitrogen.

6. The diffraction grating of any of claims 1-5, wherein the plurality of grating lines is to diffract light at a wavelength between 1,260-1,360 nanometers with an efficiency over 90% in a Littrow configuration.

7. The diffraction grating of any of claims 1-6, wherein individual grating lines of the plurality of grating lines comprise a plurality of sub-lines, wherein individual sub-lines of the plurality of sub-lines of the plurality of grating lines are to cause a position-dependent change of an effective index of refraction of the corresponding grating line.

8. The diffraction grating of claim 1, wherein individual grating lines of the plurality of grating lines have a further anti-reflection coating on a distal end of the grating line.

9. A system comprising a light detection and ranging (LIDAR) system, wherein the LIDAR system comprises the diffraction grating of any of claims 1-8.

10. The system of claim 9, further comprising an autonomous vehicle, wherein the autonomous vehicle comprises the LIDAR system.

11. A method comprising:
creating (902) an anti-reflection coating (406; 506) on a substrate (402; 502) of a wafer;
growing (904) an etch stop layer (408; 508) on the substrate, wherein growing the etch stop layer (408; 508) comprises growing the etch stop layer (408; 508) on the anti-reflection coating (406; 506);
creating (906) a second layer on the etch stop layer (408; 508); and
etching (910) the second layer to create a plurality of grating lines (410; 510) of a diffraction grating (400; 500) on the substrate (402; 502).

12. The method of claim 11, further comprising:
flipping the wafer; and
creating an anti-reflection coating on a back side of the wafer opposite the plurality of grating lines.

## Patentansprüche

1. Beugungsgitter (400; 500), umfassend:
ein Siliciumsubstrat (402; 502);
eine Vielzahl von Gitterlinien (410; 510), die sich von dem Siliciumsubstrat (402; 502) erstrecken, um Licht mit einer oder mehreren Wellenlängen zu beugen;
eine Ätzstoppschicht (408; 508) zwischen dem Substrat (402; 502) und der Vielzahl von Gitterlinien (410; 510); und
eine Antireflexionsbeschichtung (406; 506) zwischen dem Substrat (402; 502) und der Ätzstoppschicht (408; 508);
wobei individuelle Gitterlinien der Vielzahl von Gitterlinien (410; 510) eine Länge von mindestens einem Mikrometer aufweisen, gemessen von dem Siliciumsubstrat (402; 502) aus,
wobei eine maximale Längendifferenz von zwei beliebigen der Vielzahl von Gitterlinien weniger als 20 Nanometer beträgt.

2. Beugungsgitter nach Anspruch 1, ferner umfassend eine weitere Antireflexionsbeschichtung auf einer Oberfläche des Siliciumsubstrats gegenüber der Vielzahl von Gitterlinien,
wobei die weitere Antireflexionsbeschichtung Silicium und Stickstoff umfasst.

3. Beugungsgitter nach Anspruch 1, ferner umfassend eine weitere Antireflexionsbeschichtung auf einer Oberfläche des Siliciumsubstrats gegenüber der Vielzahl von Gitterlinien,
wobei die Antireflexionsbeschichtung eine erste Schicht, die Silicium und Stickstoff umfasst, eine zweite Schicht, die Silicium und Sauerstoff umfasst, eine dritte Schicht, die Silicium und Stickstoff umfasst, und eine vierte Schicht umfasst, die Silicium und Sauerstoff umfasst.

4. Beugungsgitter nach einem der Ansprüche 1-3, wobei individuelle Gitterlinien der Vielzahl von Gitterlinien Silicium umfassen.

5. Beugungsgitter nach einem der Ansprüche 1-3, wobei individuelle Gitterlinien der Vielzahl von Gitterlinien Silicium und Stickstoff umfassen.

6. Beugungsgitter nach einem der Ansprüche 1-5, wobei die Vielzahl von Gitterlinien Licht bei einer Wellenlänge zwischen 1.260-1.360 Nanometern mit einer Effizienz über 90 % in einer Littrow-Konfiguration beugen soll.

7. Beugungsgitter nach einem der Ansprüche 1-6, wobei individuelle Gitterlinien der Vielzahl von Gitterlinien eine Vielzahl von Unterlinien umfassen, wobei individuelle Unterlinien der Vielzahl von Unterlinien der Vielzahl von Gitterlinien eine positionsabhängige Änderung eines effektiven Brechungsindex der entsprechenden Gitterlinie bewirken sollen.

8. Beugungsgitter nach Anspruch 1, wobei individuelle Gitterlinien der Vielzahl von Gitterlinien eine weitere Antireflexionsbeschichtung auf einem distalen Ende der Gitterlinie aufweisen.

9. System, das ein Lichterkennungs- und Entfernungsmessungssystem (LIDAR) umfasst, wobei das LIDAR-System das Beugungsgitter nach einem der Ansprüche 1-8 umfasst.

10. System nach Anspruch 9, ferner umfassend ein autonomes Fahrzeug, wobei das autonome Fahrzeug das LIDAR-System umfasst.

11. Verfahren, umfassend:
Erzeugen (902) einer Antireflexionsbeschichtung (406; 506) auf einem Substrat (402; 502) eines Wafers;
Züchten (904) einer Ätzstoppschicht (408; 508) auf dem Substrat, wobei Züchten der Ätzstoppschicht (408; 508) Züchten der Ätzstoppschicht (408; 508) auf der Antireflexionsbeschichtung (406; 506) umfasst;
Erzeugen (906) einer zweiten Schicht auf der Ätzstoppschicht (408; 508); und
Ätzen (910) der zweiten Schicht, um eine Vielzahl von Gitterlinien (410; 510) eines Beugungsgitters (400; 500) auf dem Substrat (402; 502) zu erzeugen.

12. Verfahren nach Anspruch 11, ferner umfassend:
Umdrehen des Wafers; und
Erzeugen einer Antireflexionsbeschichtung auf einer Rückseite des Wafers gegenüber der Vielzahl von Gitterlinien.

## Revendications

1. Réseau de diffraction (400 ; 500) comprenant :
un substrat en silicium (402 ; 502) ;
une pluralité de lignes de diffraction (410 ; 510) s'étendant depuis le substrat en silicium (402 ; 502) pour diffracter la lumière à une ou plusieurs longueurs d'onde ;
une couche d'arrêt de gravure (408 ; 508) entre le substrat (402 ; 502) et la pluralité de lignes de diffraction (410 ; 510) ; et
un revêtement antireflet (406 ; 506) entre le substrat (402 ; 502) et la couche d'arrêt de gravure (408 ; 508) ;
dans lequel les lignes de diffraction individuelles de la pluralité de lignes de diffraction (410 ; 510) ont une longueur d'au moins un micromètre telle que mesurée depuis le substrat en silicium (402 ; 502),
dans lequel une différence de longueur maximale entre deux lignes quelconques de la pluralité de lignes de diffraction est inférieure à 20 nanomètres.

2. Réseau de diffraction selon la revendication 1, comprenant en outre un autre revêtement antireflet sur une surface du substrat en silicium à l'opposé de la pluralité de lignes de diffraction,
dans lequel l'autre revêtement antireflet comprenant du silicium et de l'azote.

3. Réseau de diffraction selon la revendication 1, comprenant en outre un autre revêtement antireflet sur une surface du substrat en silicium à l'opposé de la pluralité de lignes de diffraction,
dans lequel le revêtement antireflet comprend une première couche comprenant du silicium et de l'azote, une deuxième couche comprenant du silicium et de l'oxygène, une troisième couche comprenant du silicium et de l'azote, et une quatrième couche comprenant du silicium et de l'oxygène.

4. Réseau de diffraction selon l'une quelconque des revendications 1 à 3, dans lequel les lignes de diffraction individuelles de la pluralité de lignes de diffraction comprennent du silicium.

5. Réseau de diffraction selon l'une quelconque des revendications 1 à 3, dans lequel les lignes de diffraction individuelles de la pluralité de lignes de diffraction comprennent du silicium et de l'azote.

6. Réseau de diffraction selon l'une quelconque des revendications 1 à 5, dans lequel la pluralité de lignes de diffraction sert à diffracter la lumière à une longueur d'onde comprise entre 1260 et 1360 nanomètres avec une efficacité supérieure à 90 % dans une configuration Littrow.

7. Réseau de diffraction selon l'une quelconque des revendications 1 à 6, dans lequel les lignes de diffraction individuelles de la pluralité de lignes de diffraction comprennent une pluralité de sous-lignes, dans lequel les sous-lignes individuelles de la pluralité de sous-lignes de la pluralité de lignes de diffraction servent à provoquer une variation dépendant de la position d'un indice de réfraction effectif de la ligne de diffraction correspondante.

8. Réseau de diffraction selon la revendication 1, dans lequel les lignes de diffraction individuelles de la pluralité de lignes de diffraction comportent un autre revêtement antireflet sur une extrémité distale de la ligne de diffraction.

9. Système comprenant un système de détection et télémétrie par la lumière (LIDAR), dans lequel le système LIDAR comprend le réseau de diffraction de l'une quelconque des revendications 1 à 8.

10. Système selon la revendication 9, comprenant en outre un véhicule autonome, dans lequel le véhicule autonome comprend le système LIDAR.

11. Procédé comprenant :
la création (902) d'un revêtement antireflet (406 ; 506) sur un substrat (402 ; 502) d'une tranche ;
la croissance (904) d'une couche d'arrêt de gravure (408 ; 508) sur le substrat, la croissance de la couche d'arrêt de gravure (408 ; 508) comprenant la croissance de la couche d'arrêt de gravure (408 ; 508) sur le revêtement antireflet (406 ; 506) ;
la création (906) d'une deuxième couche sur la couche d'arrêt de gravure (408 ; 508) ; et
la gravure (910) de la deuxième couche pour créer une pluralité de lignes de diffraction (410 ; 510) d'un réseau de diffraction (400 ; 500) sur le substrat (402 ; 502).

12. Procédé selon la revendication 11, comprenant en outre :
le retournement de la tranche ; et
la création d'un revêtement antireflet sur une face arrière de la tranche à l'opposé de la pluralité de lignes de diffraction.
